Europäisches Patentamt

European Patent Office

Office européen des brevets

(11) Publication number: **0 032 136
B1**

(12) **EUROPEAN PATENT SPECIFICATION**

(45) Date of publication of patent specification: **10.10.90**

(51) Int. Cl.⁵: **G 06 F 13/00**

(21) Application number: **81300076.7**

(22) Date of filing: **08.01.81**

(54) Memory system.

(30) Priority: **08.01.80 US 110521
08.01.80 US 110523**

(43) Date of publication of application:
**15.07.81 Bulletin 81/28**

(45) Publication of the grant of the patent:
**10.10.90 Bulletin 90/41**

(84) Designated Contracting States:
**DE FR GB**

(56) References cited:
**DE-A-1 774 258
DE-A-1 774 259
US-A-3 602 896
US-A-3 984 811
US-A-4 099 253**

(73) Proprietor: **Honeywell Bull Inc.
3800 W. 80th Street
Minneapolis Minnesota 55431 (US)**

(72) Inventor: **Johnson, Robert B.
50 Buckingham Drive
Billerica Massachusetts 01821 (US)**
Inventor: **Nibby, Chester M. Jr.
3 Lincoln Rd.
Peabody Massachusetts 01960 (US)**
Inventor: **Moore, Dana W.
63 Dedham St.
Dover Massachusetts 02030 (US)**

(74) Representative: **Geissler, Bernhard, Dr. Patent-
und Rechtsanwälte et al
Bardehle-Pagenberg-Dost- Altenburg-
Frohwitter & Partner Postfach 86 06 20
D-8000 München 86 (DE)**

# EP 0 032 136 B1

**Description**

This invention relates to memory systems.

It is well known to construct memory systems from a number of memory modules which are paired together to provide a double word fetch access capability; that is, the capability of being able to access a pair of words at once during a cycle of operation. Conventionally, as specified in further detail in the later on cited patent documents, the memory is connected to an asynchronously operated single word wide bus. In the arrangement, a request for multiple words is made in a single bus cycle and the requested information words are delivered to the bus over a series of response cycles.

While this arrangement improves the system throughput capabilities, it becomes desirable to be able to provide access to both words simultaneously over a single bus.

It will be noted that in such paired memory module systems, it is necessary to generate and decode even and odd addresses for accessing both memory modules. In one such arrangement, the low order bits of the address provided with the memory request specify the storage location being accessed while the high order bits specify which row of RAM chips is being selected. In order to fetch the second word of the pair being accessed, it is necessary to increment by "1" the memory request address and then decode the incremented address. This results in additional delay in generating the required address increasing the overall time in delivering the requested word pair to the bus.

Moreover, it also necessitates additional counter or incrementing circuits.

Memory addressing schemes with address incrementing and memory block selection in cyclic sequence are already known in the art, for example DE-A-1774258. In all situations, this prior art scheme requires the generation of incremented word addresses which is quite time consuming and requires additional register storage for the set of incremented addresses. DE-A-1774259 is quite similar to DE-A-1774258 in that it provides for read-out and generation of even and odd address signals by incrementing.

A memory system with bytewise data transfer control and with an organization scheme for the memories into first and second modules having separately addressable word locations is disclosed in US-A-3,984,811. A word address generator uses the two least significant bits, which form the byte location number of the most significant information byte of the information word to be read. The word address generator extracts the word location address from the byte location address and increases it by "1". Also this prior art scheme largely corresponds to DE-A-1774258 in that it has full address incrementing and has selection of the original address or the incremented address, for each block, in dependence on the bottom end of the address. Thus, the same drawbacks do apply.

A random access memory with flexible data boundaries and multi-word random access wherein each memory word comprises a plurality of distinct addressable sections or bytes is shown in US-A-3,602,896. The memory is organized into four separately addressable byte sections and a boundary decoder is used to decode a byte address to determine which section is to provide the first byte of the particular word; it thus establishes an order of sequence by bytes of a word. The boundary decoder functions to control the routing of the selection signals into the core matrix, by means of some rotation circuitry. All four bytes of a word are always accessed in a single cycle. In contrast to this scheme, in the system of the subject invention, the boundary detection circuitry detects the condition where access to both words of a word-pair is not possible, and a second cycle will be needed to access the second word of the word-pair. There is no indication in US-A-3,602,896 that this situation can ever arise.

The object of the present invention is to provide an improved memory system in which the reading of a plurality of words in successive addresses is facilitated. The need for additional register storage is avoided and the burden of the incrementing time which the prior art techniques require is minimized.

The instant memory system which comprises a plurality (r) of blocks each containing a plurality of word locations with successive addresses being located in successive blocks in cyclic sequence, includes addressing circuitry for accessing a sequence of a plurality (n) of words lying in successive blocks, address incrementing means for incrementing the high-order part of bits of the address of the first word of the sequence, and decoding circuitry associated with the low-order part of bits of the address of the first word of the sequence to effect the loading of either the unincremented or the incremented high-order part of address bits into the address register and to initiate block selection starting with the block including the first word and taking the blocks in cyclic sequence.

The memory system is characterized in that the number of blocks (r) is a multiple (greater than 1) of the number of words (n) which can be accessed simultaneously, the decoding circuitry comprising first circuitry for block selection and second circuitry for boundary detection which detects when the said low-order part of address bits constitute a boundary condition whereupon the address incrementing means are activated for incrementing the said high-order part of address bits by "+1", and that timing means are provided which enable the addressing circuitry to access the whole sequence of words in a single cycle in the case of a non-boundary condition, while in the case of a boundary condition a second cycle is initiated in which the said address incrementing means perform the address incrementing of the said high-order part of address bits by "+1" and load the incremented address into the address register for accessing the said sequence of words from the said successive blocks.

Essential to the subject invention is the fact that most but not all accesses of a word-pair occur in a

2

single cycle. The structural features, giving this functional effect, lie in (a) the selection of two adjacent ones of a set of more than two blocks by the bottom end of the address, and (b) in the detection of when a boundary condition has been violated so that a second cycle can then be initiated.

In the present system, there is a plurality of rows of memory chips. Each row contains 22 chips, the word length being 22 bits (16 data bits plus 6 ECC bits). Each chip contains an array of 64 K bits (in a 256 × 256 arrangement). The row select circuitry selects not only the row containing the desired address, but also the next row up in cyclic sequence. Thus the next word is automatically selected as well by reading the corresponding location in the second selected row, provided that the first selected row is not the last in the set of rows. In the latter case, the selected address in the second row will not be the next address above the desired address, but typically 4 or 8 addresses below that. This boundary condition can be detected and the selection of the second word inhibited accordingly. However, by providing an increment-by-1 circuit associated with the first row in the set and passing the address through that circuit when the last row in the set contains the desired address, this boundary (which we now call a sub-boundary) problem can be overcome. However, the size of incrementing circuit is in practice limited, and it is therefore possible for an increment overflow to occur, so that there is still a boundary problem. This is overcome by detecting when the desired address is a boundary address, and thereupon inhibiting the selection of the second address.

It is self-evident that the technique may be extended to the selection of 2 or more addresses adjacent to the selected address.

A memory system in accordance with the invention will now be described, by way of example, with reference to the accompanying drawings, in which:

Figure 1 is a block diagram of the system.

Figure 2 shows the lines of the system bus connected to the system.

Figure 3 shows, in block diagram form, the memory subsystem 20 of Figure 1.

Figures 4a to 4c illustrate in greater detail different portions of the memory subsystem 20 of Figure 3.

Figure 5 is a timing diagram of the operation of the system.

Figure 6a illustrates the format of the address applied to the memory subsystem of Figure 1.

Figure 6b illustrates the organization of memory modules of Figure 1.

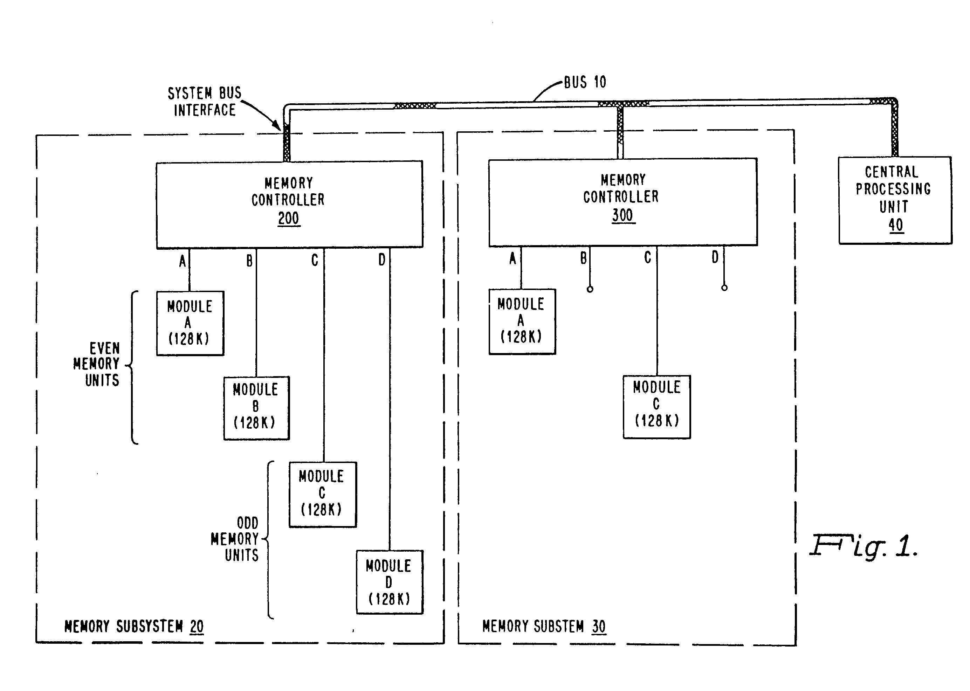

General Description of system of Figure 1

Figure 1 shows a data processing system having a multi-line bus 10 coupled to two memory subsystems 20 and 30 and to a central processing unit (CPU) 40. (It will be appreciated that the system of Figure 1 will normally also include other units.) The memory subsystems 20 and 30 each include a memory controller which can address up to four memory module units. In Figure 1, memory controller 300 is connected to address module units labelled A and C while memory controller 200 is connected to address the module units labelled A to D.

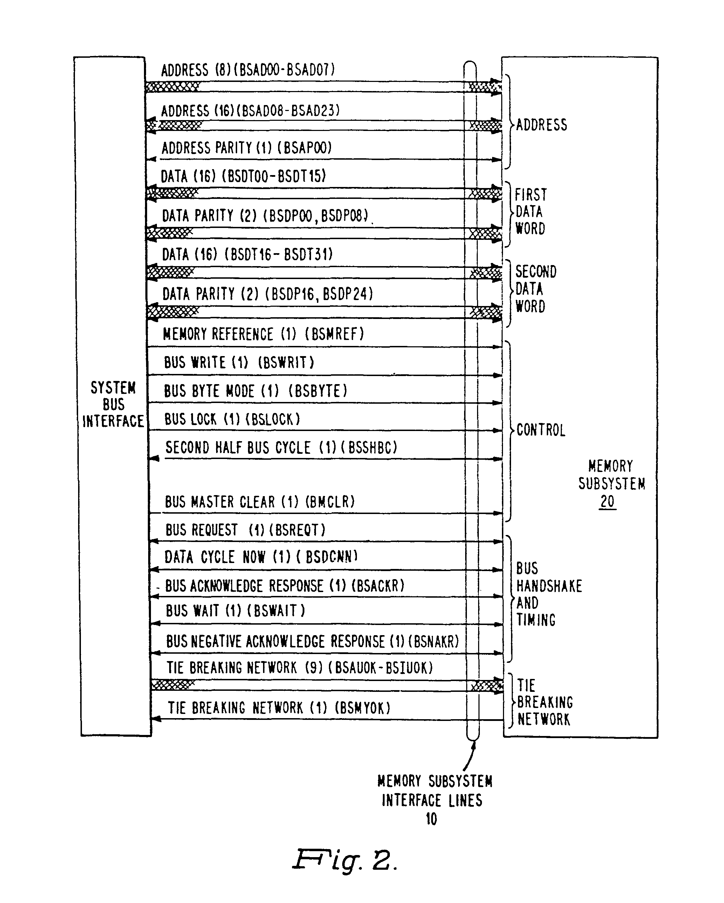

The CPU 40 is a conventional microprogrammed processing unit, and it and memory subsystems 20 and 30 communicate over the bus 10 in a predetermined manner. Briefly, a unit wishing to communicate requests a bus cycle and when the bus cycle is granted, the unit becomes the "master" and is able to address any other unit in the system as the "slave". In cases of those bus exchanges which require a response (e.g. memory read operation), the requesting unit as "master" identifies itself and indicates to the "slave" unit that a response is required. When the slave is ready to respond (e.g. obtains the information requested), it assumes the role of "master" and initiates the transfer of information to the requesting unit. Thus, the number of bus cycles vary depending upon the type of operation being performed. By altering the states of the signals applied to the control lines discussed in connection with Figure 2, a unit is able to designate, to the other unit, the type of cycle of operation being initiated or performed.

Memory Subsystem Interface

Figure 2 shows the lines which constitute the interface between each memory subsystem and bus 10. As shown, bus 10 includes a number of address lines (BSAD00-23, BSAP-00), two sets of data lines (BSDT00-15, BSDP00, BSDP08) and (BSDT16-31, BSDP16, BSDP24), a number of control lines (BSMREF-BSMCLR), a number of timing lines (BSREQT-BSNAKR) and a number of tie breaking network lines (BSAUOK-BSIUOK, BSMYOK).

The detailed functions of the interface lines are as follows:

Memory Subsystem Interface Lines

| Designation | Description |
|---|---|
| | Address Lines |
| BSAD00-BSAD23 | The bus address lines constitute a 24-bit wide path used in conjunction with the bus memory reference line BSMREF to transfer a 24-bit address to subsystem 20 or a 16-bit indentifier from subsystem 20 to bus 10 (for receipt by a slave unit). When used for memory addressing, the signals applied to lines BSAD00-BSAD03 select a particular 512 K word module, the signals applied to lines BSAD04-BSAD22 select |

3

one of the 512 K words in the module while the signal applied to line BSAD23 selects one of the bytes within the selected word (i.e., BSAD23 = 1 = right byte; BSAD23 = 0 = left byte).

When used for identification, lines BSAD00-BSAD07 are not used. The lines BSAD08-BSAD23 carry the identification of the receiving unit as transmitted to subsystem 20 during the previous memory read request.

| | |
|---|---|
| BSAP00 | The bus address parity line is a bidirectional line which provides an odd parity signal for the address signals applied to lines BSAD00-BSAD07. |

## Data Lines

| | |
|---|---|
| BSDT00-BSDT15, BSDT16-BSDT31 | The sets of bus data lines constitute a 32-bit or 2-word wide bidirectional path for transferring data or identification information between subsystem 20 and bus 10 as a function of the cycle of operation being performed. |

During a write cycle of operation, the bus data lines transfer information to be written into memory at the location specified by the address signals applied to lines BSAD00-BSAD23. During the first half of a read cycle of operation, the data lines transfer identification information (channel number) to the subsystem 20. During the second half of the read cycle, the data lines transfer the information read from memory.

| | |
|---|---|
| BSDP00, BSDP08, BSDP16, BSDP24 | The bus data parity lines are two sets of bidirectional lines which provide odd parity signals coded as follows:<br>BSDP00 = odd parity for signals applied to lines BSDT00-BSDT07 (left byte);<br>BSDP08 = odd parity for signals applied to lines BSDT08-BSDT15 (right byte);<br>BSDP16 = odd parity for signals applied to lines BADT16-BSDT23; and<br>BSDP24 = odd parity signals applied to lines BSDT24-BSDT31. |

## Control Lines

| | |
|---|---|
| BSMREF | The bus memory reference line extends from bus 10 to the memory subsystem 20. When set true, this line signals to the subsystem 20 that the lines BSAD00-BSAD23 contain a complete memory controller address and that it is performing a write or read operation upon the specified location. When reset false, the line signals subsystem 20 that the lines BSAD00-BSAD23 contain information directed to another unit and not subsystem 20. |
| BSWRIT | The bus write line extends from the bus 10 to the memory subsytem 20. This line when set true, in conjunction with line BSMREF being true, signals subsystem 20 to perform a write cycle of operation. When reset false, this line, in conjunction with line BSMREF being true, signals subsystem 20 to perform a read cycle of operation. |
| BSBYTE | The bus byte line extends from bus 10 to subsystem 20. This line, when set true, signals subsystem 20 that it is to perform a byte operation rather than a word operation. |
| BSLOCK | The bus lock line extends from bus 10 to subsystem 20. When set true, this line signals to subsystem 20 a request from central processor 40 to test or change the status of a memory lock flip-flop included within the controller 200. |
| BSSHBC | The bus second half bus cycle line is used to signal to a unit that the current information applied to bus 10 by, subsystem 20 is the information requested by a previous read request. In this case, both subsystem 20 and the unit receiving the information are busy to all units from the start of the initiation cycle until subsystem 20 completes the transfer.<br>This line is used in conjunction with the BSLOCK line to set or reset its memory lock flip-flop. When a unit is requesting to read or write and line BSLOCK is true, the line BSSHBC, when true, signals subsystem 20 to reset its lock flip-flop. When false, it signals subsystem 20 to test and set its lock flip-flop. |
| BSMCLR | The bus master clear line extends from bus 10 to subsystem 20. When this line is set to a true state, it causes the subsystem 20 to clear to zeros certain bus circuits within controller 200. |

## Bus Hankshake/Timing Lines

| | |
|---|---|
| BSREQT | The bus request line is a bidirectional line which extends between bus 10 and |

subsystem 20. When set true, it signals to the subsystem 20 that another unit is requesting a bus cycle. When reset false, it signals to subsystem 20 that there is no bus pending bus request. This line is forced true by subsystem 20 to request a read second half bus cycle.

BSDCNN    The data cycle line is a bidirectional line which extends between bus 10 and subsystem 20. When forced true, the line signals to the subsystem 20 that a unit was granted a requested bus cycle and placed information on the bus for another unit. The subsystem 20 forces the line true to signal that it is transmitting requested data back to a unit. Prior to this, subsystem 20 had requested and been granted a bus cycle.

BSACKR    The bus acknowledge line is a bidirectional line which extends between the bus 10 and subsystem 20. When set true (binary ONE) by subsystem 20, the line signals that it is accepting a bus transfer during a read first half bus cycle or write cycle. During a read second half bus cycle, this line, when set true by the unit which originated the request, signals the subsystem 20 of its acceptance of a transfer.

BSWAIT    The bus wait line is a bidirectional line which extends between bus 10 and subsystem 20. When set to true by subsystem 20, it signals a requesting unit that the subsystem cannot accept a transfer at this time. Thereafter, the unit will initiate successive retries until the subsystem 20 acknowledges the transfer. The subsystem 20 sets the BSWAIT line true under the following conditions:

1. It is busy performing an internal read or write cycle of operation.
2. It is requesting a read second half bus cycle.
3. It is anticipating a refresh operation.
4. It is performing a refresh operation.
5. It is busy when placed in an initialize mode.

When the BSWAIT line is set to a true or binary ONE state by a unit, this signals to the subsystem 20 that the data is not being accepted by the requesting unit and that the subsystem should terminate its present bus cycle of operation.

BSNAKR    The bus negative acknowledge line is a bidirectional line which extends between the bus 10 and subsystem 20. When this line is set true by subsystem 20, it signals that it is refusing a specified transfer. The subsystem 20 sets line BSNAKR true as follows:

1. Memory lock flip-flop is set to a binary ONE, and
2. The request is to test and set the lock flip-flop (BSLOCK true and BSSHBC false).

In all other cases, when the memory lock flip-flop is set, subsystem 20 generates a response via the BSACKR line or the BSWAIT line or generates no response. When the BSNAKR line is forced true by a unit, this signals subsystem 20 that the data is not accepted by the unit and to terminate its cycle of operation.

Tie Breaking Control Lines

BSAUOK-BSIUOK    The tie breaking network lines extend from bus 10 to subsystem 20. These lines signal subsystem 20 whether units of higher priority have made bus requests. When all the signals on these lines are binary ONES, this signals subsystem 20 that it has been granted a bus cycle at which time it is able to force the BSDCNN line to a binary ONE. When any one of the signals on the lines is a binary ZERO, this signals subsystem 20 that it has not been granted a bus cycle and is inhibited from forcing line BSDCNN to a binary ONE.

BSMYOK    The tie breaking network line extends from subsystem 20 to bus 10. Subsystem 20 forces this line to a false or binary ZERO state to signal other units of lower priority of a bus request.

Memory Subsystem 20

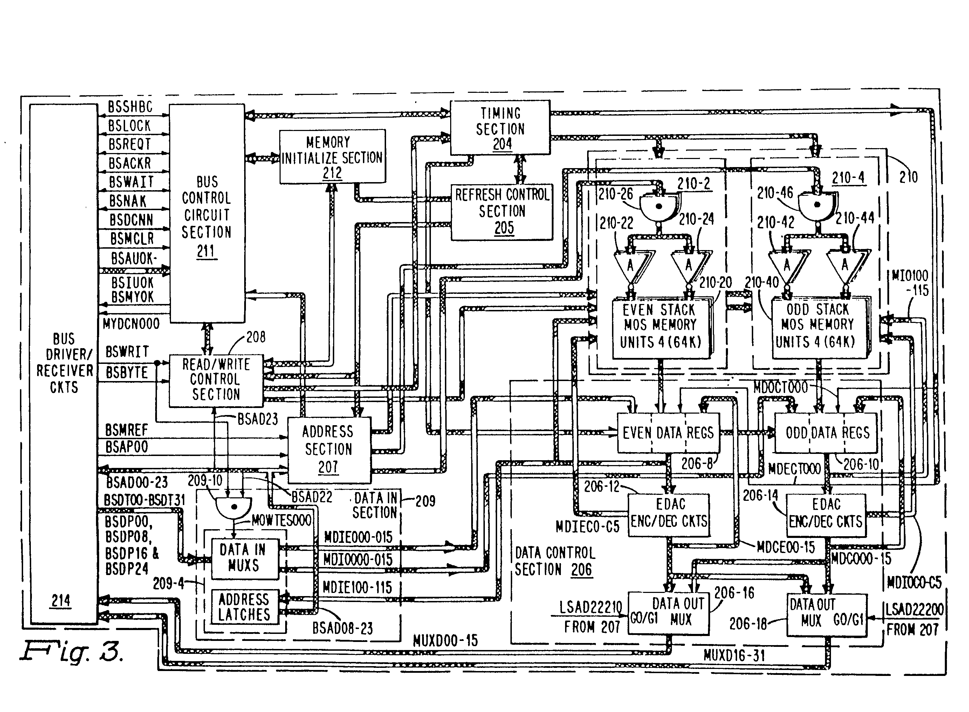

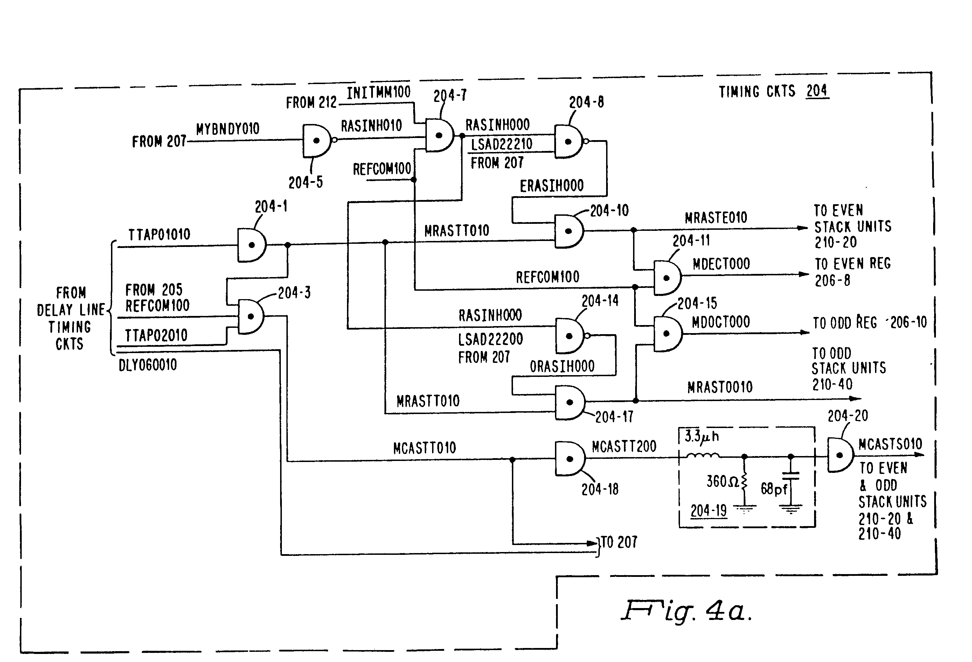

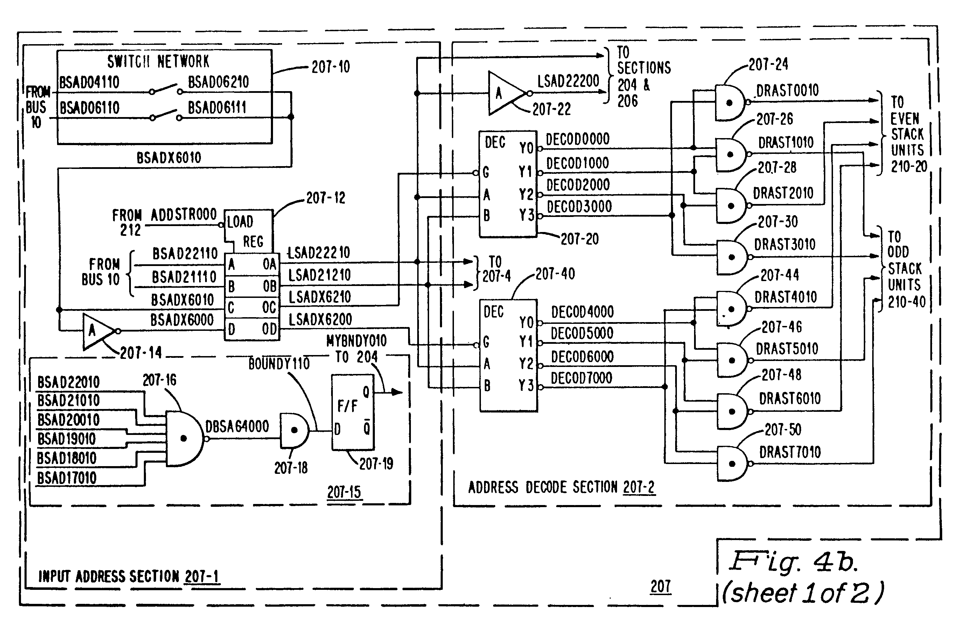

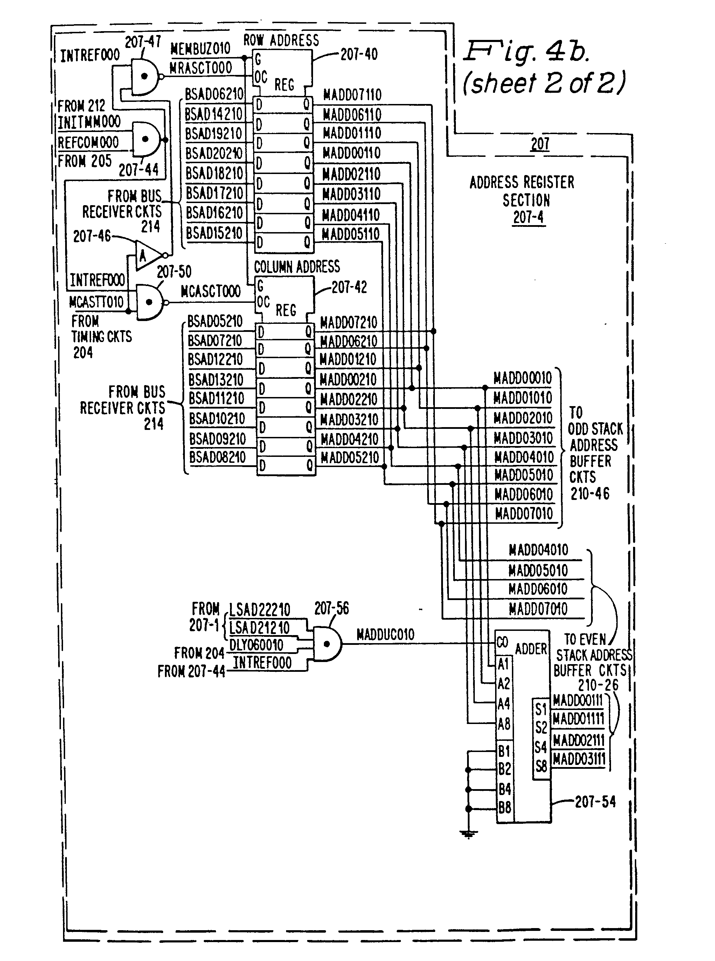

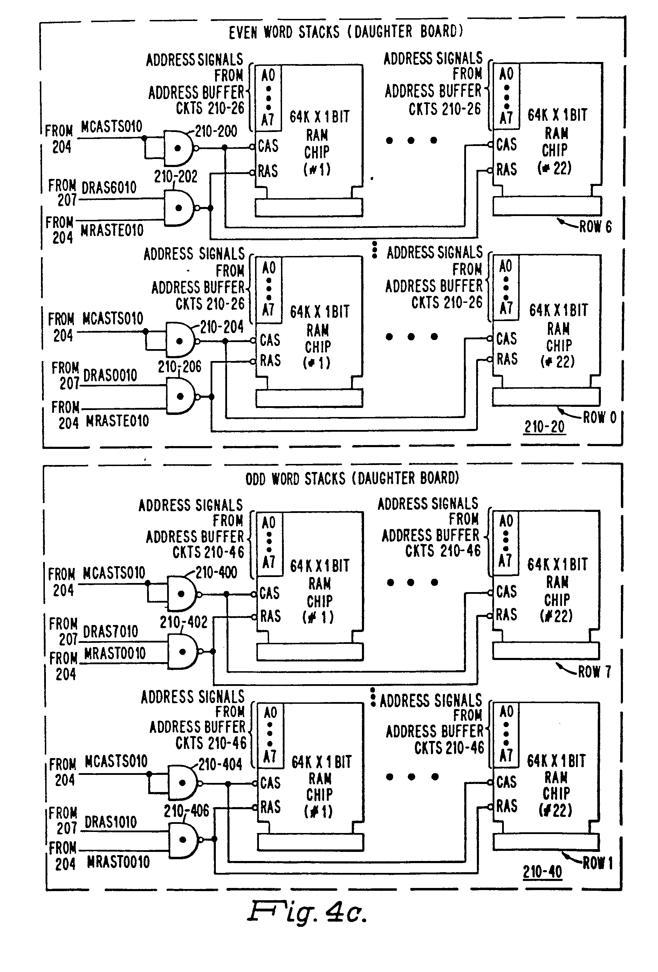

Referring to Figure 3, subsystem 20 includes a memory controller 200 which controls the two 128 K word memory module units 210-2 and 210-4 of memory section 210. The module units of blocks 210-2 and 210-4 include high speed MOS random access memory integrated circuits, blocks 210-20 and 210-40, and address buffer circuits, blocks 210-22 to 210-46. Each 128 K memory unit is constructed from 64 K word by 1 bit dynamic MOS RAM chips; as shown in greater detail in Figure 4C, each 128 K by 22 bit memory module includes 44 chips each 65,536 (64 K) word by 1 bit. Within each chip there is a number of storage arrays organized in a matrix of 256 rows by 256 columns of storage cells.

The controller 200 includes those circuits required to generate memory timing signals, perform refresh operations, data transfer operations, address distribution and decoding operations and bus interface operations. Such circuits are included as parts of the different sections of Figure 3, which include a timing section 204, a refresh control section 205, a data control section 206, an address section 207, a read/write control section 208, a data in section 209, a bus control circuit section 211 and memory initialize circuit section 212.

The bus control section 211 includes the logic circuits which generate signals for generating and accepting bus cycle requests for single and double word operations. As seen from Figure 3, these circuits as well as the circuits of other sections are connected to bus 10 via conventional driver and receiver circuits. It will be noted that the binary ONE and ZERO states of the signals on bus 10 and those utilized within subsystem 20 differ. The bus signals operate with negative logic while the subsystem 20 utilizes positive logic. The section 211 includes the tie breaking network circuits which resolves request priority on the basis of a unit's physical position on the bus. The memory subsystem 20, located at the leftmost or bottom position, is assigned the highest priority while the CPU 40, located at the rightmost or top position, is assigned the lowest priority.

The timing section 204, shown in detail in Figure 4a, includes circuits which generate the required sequence of timings signals for memory read and write cycles of operation. As seen from Figure 3, this section transmits and receives signals to and from sections 205, 206, 207, 208, and 211.

The address section 207, shown in detail in Figure 4b, includes circuits which decode, generate and distribute address signals required for initialization and read/write selection. The section 207 receives address signals from lines BSAD00-BSAD23 and BSAP00 in addition to the memory reference control signal from the BSMREF line. Additionally, section 207 receives control and timing signals from sections 204 and 212.

The memory initialize section 212 includes conventional circuits for clearing the memory subsystem circuits to an initial or predetermined state.

The read/write control section 208 includes conventional register and control logic circuits. The register circuits receive and store signals corresponding to the states of the BSWRIT and BSBYTE control lines and the address line BSAD23. The control circuits decode the signals from register circuits and generate signals applied to sections 204, 207, and 210 for establishing whether the subsystem is to perform a read, a write, or a read followed by a write cycle of operation (i.e., for a byte command).

The refresh section 205 includes the circuits for periodically refreshing the contents of memory. Section 205 receives timing and control signals from section 204 and provides control signals to sections 204, 207, 208 and 212.

The data in section circuits of block 209 include a pair of multiplexer circuits and address register 209-4 which is connected to receive signals from section 206. The multiplexer circuits receive data words from the two sets of bus lines BSDT00-15 and BSDT16-31 and apply to appropriate words via the sets of output lines MDIE000-15 and MDI000-015 to the correct memory modules during a write cycle of operation. That is, multiplexer circuits are controlled by signal MOWTES000 generated by an AND gate 209-10. The AND gate 209-10 generates signal MOWTES000 as a function of bus address bit 22 (i.e., signal BSAD22) and whether the memory subsystem is doing a write operation (i.e., signal BSWRIT). During a write operation, signal MOWTES000 applies the correct data word (i.e., the word applied to bus lines BSDT00-15 or BSDT16-31) into the correct memory unit. This enables a write operation to start on any word boundary.

During a read operation, the multiplexer circuits are conditioned to apply the module identification information received from the bus lines BSDT00-15 back to the address bus lines BSAD08-23. This is done by loading the signals applied to lines BSDT00-15 into the even data registers 206-8 of section 206. This, in turn, causes the address register latches of block 209-4 to be loaded with the module identification information transmitted via the bus lines BSDT00-15. Since this is not pertinent to present purposes, it will not be further discussed.

The data control section 206 includes the registers 206-8 and 206-10 and data out multiplexer circuits 206-16 and 206-18. These circuits enable data to be written into and/or read from the odd and even memory units 210-20 and 210-40 of section 210 under the control of signals from sections 204 and 207. During a read cycle of operation, operand or instruction signals are read out simultaneously from the units 210-20 and 210-40 into the even data and odd data registers 206-8 and 206-10. During a write cycle of operation, operand signals are loaded into the even data and odd data registers 206-8 and 206-10 from section 209 and written into the memory units of section 210.

For the ease of illustration, the even data and odd data registers 206-8 and 206-10 are shown as a single block. However, it should be understood that these registers actually are made up of three distinct registers represented by the dotted lines in each block. The reason is that multiple registers are required for using the EDAC generation and correction logic circuits during both read and write cycles.

It will be noted that the outputs of these registers connect in common. In order to provide the appropriate transfers of data during read, write and byte write operations, the appropriate register is enabled by the tristate control. Such registers are constructed from D type transparent latch circuits. In the case of a read operation, this enables the address ID information received from the bus 10 to be transferred to the address latches of block 209-4. For present purposes it can be assumed that the appropriate data register is enabled during the processing of memory requests.

The section 206 further includes an error detection and correction (EDAC) capability wherein each word contains 16 data bits and 6 check bits used to detect and correct single bit errors in the data words and detect and signal, without correction, double bit errors in the data word.

The EDAC capability is provided by the EDAC encoder/decoder circuits 206-12 and 206-14. These conventional circuits, as shown, connect to the even and odd data registers 206-8 and 206-10. During read and write cycles of operation, they perform the required encoding and decoding operations.

Detailed Description of Controller Sections

Only those sections relevant of present purposes are described herein.

Section 204

Figure 4a illustrates in greater detail the timing circuits of section 204. The circuits receive input timing pulse signals TTAP01010, TTAP02010, and DLYO60010 from conventional delay line timing generator circuits, not shown. The timing generator circuits generate a series of timing pulses via a pair of series connected 200 ns delay lines in response to the signal MYACR010 being switched to a binary ONE. These pulses in conjunction with the circuits of block 204 establish the timing for the remaining sections during a memory cycle of operation.

Additionally, the circuits of block 204 receive a boundary signal MYBNDY010, address signals LSAD22200 and LSAD22210 from section 207. Also, section 212 applies an initialize signal INITMM100 to section 204. The signal MYBNDT010 is applied to a NAND gate 204-5 which forces signal RASINH010 to a binary ZERO. The series connected AND gate 204-7 logically combines this signal with initialize signal INITMM100 and refresh command signal REFCOM100 generated by circuits (not shown) within section 204, to produce signal RASINH000. A NAND gate 204-8 combines signals RASINH000 and address signal LSAD22210 to produce an even row strobe inhibit signal ERASIH000. The signal is applied to an AND gate 204-10 for combining with a timing signal MRASTT010 derived from signal TTAP01010 via an AND gate 204-1. The result output signal MRASTE010 is applied to the RAS timing input of the even stack units 210-20.

A NAND gate 204-14 combines signals RASINH000 and LSAD222000 to produce an odd row inhibit signal ORASIH000. This signal is combined in an AND gate 204-17 with timing signal MRASTT010 to generate row timing signal MRAST0010. This signal is applied to the RAS timing input of the odd stack units 210-40.

As seen from Figure 4a, an AND gate 204-11 applies a timing signal MDECT000 to the even data register 206-8 in the absence of a refresh command (i.e., signal REFCOM100 = 0). Similarly, an AND gate 204-15 applied a timing signal MDOCT000 to the odd data register 206-10. The delay network 204-19 which is connected in series with AND gates 204-3, 204-18 and 204-20 generate timing signal MCASTS010. The signal MCASTS010 is applied to the CAS timing input of the even and odd stack units 210-20 and 210-40.

The signal DLYO60010 generated by the delay line timing circuits switches to a binary ZERO, 60 ns following the start of the memory cycle. It remains a binary, ZERO during the interval that the column addresses are latched into the RAM chips. This ensures that only the row addresses are incremented.

Section 207

Figure 4b illustrates the different sections of address section 207. As shown, section 207 includes an input address section 207-1, an address decode section 207-2 and an address register section 207-4. The input address section 207-1 includes a set of manually selectable switches of block 207-10 which receive bus address signals BSAD04110 and BSAD06110. These switches select the high order bus address bit which selects the upper/lower 256 K of memory when the system includes a full complement of 128 K memory modules (i.e., modules A-D). When the memory modules are constructed using 64 K chips, the top switch is placed in the closed position. This selects address bit 4 (signal BSAD04110) as the high order bus address bit. For 16 K chips, the other switch is placed in the closed position which selects address bit 6.

Since it is assumed that the memory includes 64 K chips, the top switch is closed while the other switch is opened. The resulting high order bit signal BSADX6010 in addition to its complement along with the least significant bus address bits 22 and 21 are stored in a register 207-12. An inverter circuit 207-14 generates complement signal BSADX6000. The four signals are loaded into register 207-12 when address strobe signal ADDSTR000 is forced to a binary ZERO. This occurs when the memory is busy (i.e., accepts a bus cycle/a memory request).

The output of register 207-12 are applied as inputs to the sections 204 and 206. The input address section 207-1 also includes boundary detection circuits of block 207-15. The circuits include a NAND gate 207-16 which feeds the D input terminal of a D type flip-flop 207-18 via an AND gate 207-17. The NAND gate 207-16 receives the memory request address bits 22-17 from bus 10 and forces output detection boundary signal DBSA64000 to a binary ZERO when address bits 22-17 are all binary ONES. This, in turn, causes flip-flop 207-18 to switch from a binary ONE to a binary ZERO state forcing signal MYBNY010 to a binary ZERO. The signal MYBNDY010 is applied as an input to timing section 204.

As shown, the least significant address bit signals LSAD22210 and LSAD21210 are applied to the input terminals of a binary decoder circuit 207-20. The least significant bit address signal LSAD22210 and its complement signal LSAD22200 generated by an inverter circuit 207-22 are applied to sections 204 and 206. The high order bit signal LSADX6210 is applied to the enable/gate input terminal of decoder circuit 207-20. The complement signal LSADX6200 is applied to the enable/gate input of decoder circuit 207-40, together with address signals LSAD22210 and LSAD21210.

Each of the four decode outputs DECOD0000 to DECOD3000 is connected to a different pair of the NAND gates 207-24 to 207-30. It will be noted that the zero decode signal DECOD0000 is connected to the inputs of NAND gates 207-24 and 207-26 which generate the 0 and 1 row address strobe signals. Similarly, the 1 decode signal DECOD1000 is connected to the inputs of NAND gates 207-26 and 207-28 which generate the 1 and 2 row address strobe signals. The next sequential decode signal DECOD2000 is connected to the two NAND gates which generate the next pair of sequential row address strobe signals. Lastly, the last decode signal DECOD3000 is connected to NAND gates 207-30 and 207-24 which generate the 3 and 0 row address strobe signals.

In an identical fashion to that just described, each of the four decode outputs DECOD4000 to DECOD7000 is connected to a different pair of the NAND gates 207-44 to 207-50. That is, the 0 decode signal DECOD4000 is connected to the inputs of NAND gates 207-44 and 207-46 which generate the 4 and 5 row address strobe signals. The 5 decode signal DECOD5000 is connected to the inputs of NAND gates 207-46 and 207-48 which generate the 5 and 6 row address strobe signals. The next sequential decode signal DECOD6000 is connected to the two NAND gates which generate the next pair of sequential row address strobe signals. Lastly, the last decode signal DECOD7000 is connected to NAND gates 207-50 and 207-44 which generate the 7 and 4 row address strobe signals.

As shown, the even row address strobe signals DRAST0010 to DRAST6010 are applied to the RAM chips of the even stack units 210-20. The odd row address strobe signals DRAST1010 to DRAST7010 are applied to the RAM chips of the odd stack units 210-40.

Section 207-4 shows in greater detail the addressing arrangement. It is seen that the bus address signals BSADO5210 to BSAD20210 are applied via the bus receiver circuits of block 214 of Figure 3 as inputs to different stages of a tristate operated row address register 207-40 and a tristate operated column address register 207-42. The enabling gate inputs of both registers are fed with a memory busy signal MEMBUZ010 from section 204. The OC input of row address register 207-40 receives a timing signal MRASCT000 generated by AND gate 207-44, inverter circuit 207-46, and NAND gate 207-47 in response to signals INITMM000, REFCOM000, and CASTT010. The OC input of column address register 207-42 receives a timing signal MCASCT000 generated by NAND gate 207-44 and NAND gate 207-50 in response to signals INITMM000, REFCOM000, and MCASTT010.

Each of the address registers 207-40 and 207-42 is constructed from D type transparent latch circuits. The term "transparent" means that while the G input is a binary ONE, the signals at the Q outputs follow the signals applied to the D inputs. As seen from Figure 4b, the different address outputs of the register of each set are connected in common in a wired OR arrangement for enabling the multiplexing of these address signals. Such multiplexing is accomplished by controlling the state of the signals applied to the output control (OC) inputs of the registers 207-40 and 207-42.

More specifically, the output control (OC) terminals enable so-called tristate operation which is controlled by the circuits 207-44 to 207-50. When each of the signals MRASCT000 and MCASCT000 is in a binary ONE state, this inhibits any address signal from appearing at the Q output terminals of that register. However, this operation is independent of the latching action of the register flip-flops. Additionally, section 207-4 includes a conventional 4-bit binary full adder circuit 207-54. The adder circuit 207-54 is connected to increment by 1 the low order address bits 20 to 17. In greater detail, the input terminal A1-A8 receive signals MADD00110 to MADD03110. Binary ZERO signals are applied to input terminals B1-B8. An AND gate 207-56 generates a carry in signal MADDUC010 as a function of the states of the least significant address signals LSAD22210 and LSAD21210, signal INTREF000 and timing signal DLYO60010.

The incremented output signals MADD00111 to MADD0311 appearing at adder sum terminals S1-S8 are applied via address buffer circuits 210-26 to the even stack RAM chips of Figure 4c. The same is true of signals MADD04010 to MADD07010. The odd stack RAM chips of Figure 4c are connected to receive the address signals MADD0010 to MADD07010 via address buffer circuits 210-46.

Memory Units 210-20 and 210-40 — Figure 4c

As previously discussed, the even word and odd word stacks of blocks 210-20 and 210-40 are shown in greater detail in Figure 4c. These stacks include four rows of 22 64 K × 1-bit RAM chips as shown. The chips and associated gating circuits are mounted on a daughter board. Each daughter board includes 8, 2 input positive NAND gates (210-200 to 210-206 and 210-400 to 210-406) which receive the row and column timing signals from section 204 and the row decode signals from section 207. Only those chip terminals pertinent to present purposes are shown. The remaining terminals, not shown, are connected in a conventional manner.

Description of Operation

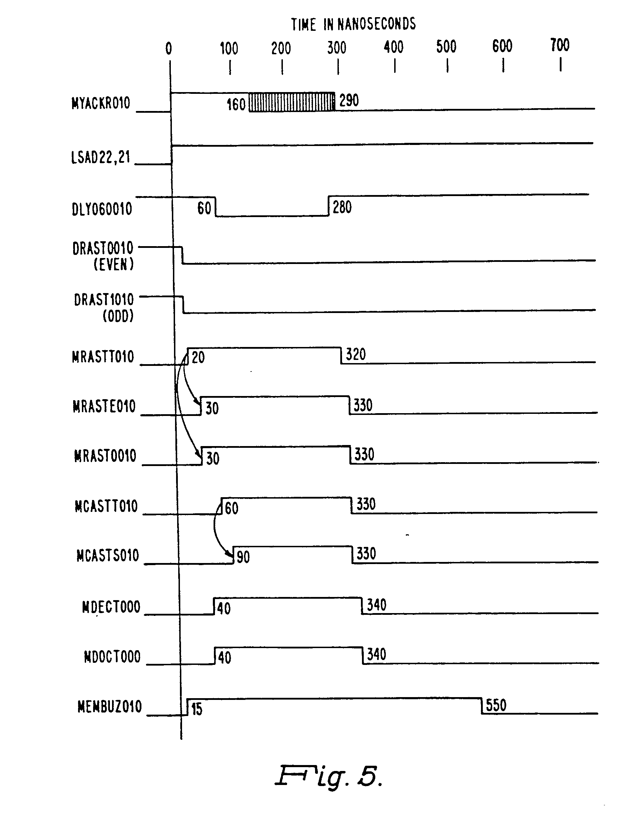

The operation of the present system will now be described with particular reference to the timing diagram of Figure 5. It will be assumed that each of the units 210-2 and 210-4 include two 128 K modules as shown in Figures 3, 4c and 4b. It will be obvious that each of the units 210-2 and 210-4 can include any number of stack units, provided that both of the units 210-2 and 210-4 include the same number of stack units.

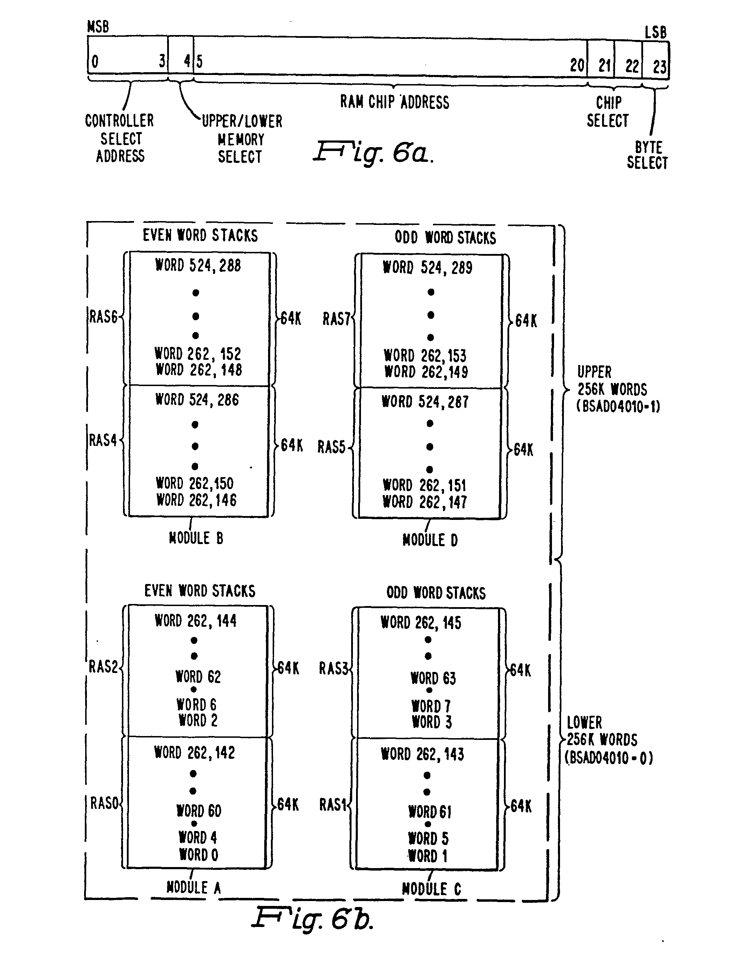

Before discussing an example of operation with reference to Figure 5, reference is first made to Figures 6a and 6b. Figure 6a illustrates the format of the memory addresses applied to the memory subsystem as part of each memory read or write request. The high order/most significant bit positions are coded to identify the memory module/controller to process the request. Address bit 4 is used to select which 256 K half (i.e., upper or lower half) of controller memory is being accessed. These address bits are processed in a conventional manner by the circuits of memory subsystem 20 and are not provided to the RAM chips.

Figure 6b illustrates the word memory organization of modules A to D of Figure 1. As shown, the first 256 K words are provided by modules A and C. The next 256 K words are provided by modules B and D. These pairs of modules are selected as a function of the state of bus address bit 4 as previously mentioned. Figure 6b will be referred to to explain the manner in which the present system achieves sequential word addressing in the presence of sub-boundary conditions and extends the sub-boundary conditions to eliminate any adverse effect on memory system operations.

Address bits 5-20 specify the address of the 22-bit storage location within the RAM chips being addressed. These 16 address bits are multiplexed into 8 address inputs and applied via the address buffer circuits of blocks 210-26 and 210-46 to the address input terminals A0-A7 of the RAM chips of Figure 4c.

In the present system, the least significant address bits 21-22 are coded to select which row of RAM chips are being addressed. These bits are decoded and used to generate a pair of row address strobe (RAS) signals which latch the 8-bit row addresses into the desired row or RAM chips within each memory stack.

Figure 5 illustrates diagrammatically the relationships between the different timing and control signals generated by the circuits of sections 207 and 204 during a single memory cycle of operation. The various signals shown are referenced with respect to signal MYACKR010 which starts a memory cycle of operation. It is assumed that subsystem 20 receives a memory command which includes an address having the format of Figure 6a. This results in the switching of signal MYACKR010 to a binary ONE. The signal MYACKR010 causes the circuits of block 204 to force the memory busy signal MEMBUZ10 to a binary ONE indicating that the memory subsystem has begun a memory cycle of operation (i.e., memory is busy).

In response to the memory busy signal MEMBUZ010, the bus address signals BSAD05210 to BSAD20210 are loaded into row address register 207-40 and column address register 207-42. Also, signal MEMBUZ010 switches signal ADDSTR000 of Figure 4b to a binary ZERO. This loads the least significant address bit signals BSAD22110 and BSAD21110 in addition to signal BSADX610 into register 207-12.

As seen from Figure 4b, the stored address signals LSAD22210 and LSAD21210 are decoded by decoder circuits 207-20 and 207-40 which are enabled for operation by signals LSADX6210 and LSADX62000, respectively. By way of example, assume that the address bits 4-20 are all ZEROS. Accordingly, the decoder circuit 207-20 enabled by signal LSADX6210 forces the zero decode signal DECOD0000 to a binary ZERO. This signal conditions NAND gates 207-24 to 207-26 to force signals DRAST0010 and DRAST1010 to binary ONES. As seen from Figure 4c, the signal DRAST0010 is applied as one input of NAND gate 210-206 of the even word stack 210-20. The signal DRAST1010 is applied as one input of NAND gate 210-406 of the odd word stack 210-20. When the timing signals MRASTE010 and MRAST0010 are generated, the NAND gates 210-206 and 210-406 force their outputs to binary ZEROS. This, in turn, results in the storing of the row address signals from row address register 207-40 applied via the address buffer circuits to the terminals A0-A7 of both rows of RAM chips within stacks 210-20 and 210-40.

In greater detail, the timing circuits of Figure 4a in response to signal MYACKR010 begin a cycle of operation during which timing signals TTAP01010 and TTAP02010 are generated. These signals cause gates 204-1, 204-3, 204-10 and 204-17 to generate signals MRASTT010, MCASTT010, MRASTE010, and MRAST0010 respectively, at the times shown in Figure 5. As mentioned, the row timing signals MRASTE010 and MRAST0010 together with corresponding ones of the row decode signals DRAST0010 and DRAST1010 generate even and odd row address strobe signals which are applied to the RAS terminals of both rows of RAM chips. At that time, signal MCASTT010 is a binary ZERO. From Figure 4b, it is seen that the output signal MRASCT000 from NAND gate 207-47 is a binary ZERO at this time (i.e., when signal MCASTT010 is a binary ZERO). This conditions row address register 207-40 to apply the all ZERO bus address signals at its inputs to its output terminals. From there the address signals MADD00010-MMADD07010 are applied to the odd stack address buffer circuits 210-46. As seen from Figure 4b, the high order 4 row address bits are also applied to the even stack address buffer circuits 210-26. Since the least significant bits LSAD21210 and LSAD22210 have the value "00", AND gate 207-56 holds signal MADDUC010 at a binary ZERO during the interval signal DLYO60010 is a binary ONE (i.e., during RAS time). Accordingly, the low order 4 row address bits pass through adder circuit 207-54 unincremented. Accordingly, both rows of RAM chips latch or store the 8-bit all ZERO row address signals applied to the A0-A7 terminals.

As seen from Figure 4a, timing signal MCASTT010 causes delay network 204-19 and gates 204-18 and 204-20 to generate signal MCASTS010 at the time shown in Figure 5. The signal MCASTS010 is applied via NAND gates 210-200, 210-204, 210-400 and 210-406. This results in a column address strobe signal being applied to the CAS terminals of the rows of RAM chips. However, since signal DLYO60010 is a binary ZERO, both rows of RAM chips latch or strobe the 8-bit column address signals applied to the A0-A7 terminals.

In greater detail, when signal MCASTT010 switches to a binary ONE, signals MRASCT000 and

9

MCASCT000 switch to a binary ONE and binary ZERO, respectively. The result is that the bus address signals BSAD0520 and BSAD07210 to BSAD13210 are applied to the output terminals of register 207-42. At the same time, register 207-40 is inhibited from applying bus address signals to its output terminals. From there, the column address signals MADD00010 to MADD07010 are applied to the odd and even buffer circuits 210-46 and 210-26. That is, since signal DLYO60010 is a binary ZERO during this interval (i.e., duringl CAS time), AND gate holds signal MADDUC010 in a binary ZERO state.

In the example under consideration, the all ZERO memory address causes the contents of the storage locations of memory modules A and C of Figure 6b defined by the ZERO row and column address values storing word 0 and word 1 to be accessed. This results in word 0 and word 1 being loaded into the even data and odd data registers 206-8 and 206-10, respectively, in response to signals MDECT000 and MDOCT000 of Figure 5.

From there, word 0 and word 1 are applied to lines MUXD00-15 and MUXD16-31 of Figure 3 via the data out multiplexer circuits 206-16 and 206-18 as a function of the state of the least significant address bit LSAD22. That is, when signal LSAD22210 is a binary ZERO, the contents of the even data register 206-8 are applied to lines MUXD00-15 by multiplexer circuit 206-16. The multiplexer circuit 206-18 applies the odd data register contents to lines MUXD16-31. The reverse of this occurs when address bit LSAD22210 is a binary ONE. In this manner, access to both memory module units can occur without regard to word boundaries. As seen from Figure 5, the memory cycle of operation is completed when the circuits of section 204 switch the memory busy signal MEMBUZ010 to a binary ZERO.

For the least significant address bit values 00 to 10, the RAM chip address bits 5-20 are the same. However, when the least significant address bits have the value "11" this creates a sub-boundary address condition. That is, the memory request address specifies that the words 3 and 0 of Figure 6b be accessed. However, it is desired that words 3 and 4 from modules A and C be accessed and read out to multibus 10. In order to accomplish the accessing of the desired row, adder circuit 207-54 is conditioned to increment by 1 the row address applied to the RAM chips of the even memory unit 201-20.

In greater detail, the least significant address bit value "11" causes decoder circuit 207-20 to force the "3" decode output signal DECOD3000 to a binary ZERO. This, in turn, causes NAND gates 207-30 and 207-24 to force simultaneously signals DRAST3010 and DRAST0010 to binary ONES.

Accordingly, signals DRAST3010 and DRAST0010 together with timing signals MRAST0010 and MRASTE010 load the row address signals applied to the A0-A7 terminals into the RAM chips of rows 0 and 3 of memory units 210-20 and 210-40 of Figure 4c. However, it will be noted that the row address signals applied to the A0-A3 terminals of the RAM chips of row 0 are incremented by 1 by adder circuit 207-54 when the least significant address bits 21-22 have the value "11". The RAM chips of row 3 as well as the other rows of the odd memory unit 210-40 receive the unincremented row address signals.

Accordingly, words 3 and 4 of modules C and A of Figure 6b are accessed and read out to bus 10 via multiplexer circuits 206-16 and 206-18 as a function of the state of least significant address bit 22.

It will be appreciated that the next three words are accessed in the manner described above. However, when the memory request address specifies word 7, the adder circuit 207-54 extends the address sub-boundary condition by incrementing by 1 the row address applied to the even memory unit RAM chips. This enables words 7 and 8 from modules A and C to be accessed and read out to multiword bus 10.

Addressing proceeds in the above manner until the memory request address specifies word 63. At this point, the range of the adder circuit 207-54 is exceeded. Since it is not possible to provide the correct row address, the boundary circuits of block 207-15 detect the boundary address condition and switch signal MYBNDY010 to a binary ZERO. That is, the all ONES value of bus address bits 22-17 causes NAND gate 207-16 to switch to a binary ZERO. This switches flip-flop 207-18 to a binary ZERO state.

From Figure 4a, it is seen that signal MYBNDY010 forces signal RASINH000 to a binary ONE. This conditions NAND gates 204-8 and 204-14 to generate row address strobe inhibit signals ERASIH000 and ORASIH000 as a function of the state of least significant address bit 22. Since bit 22 is a binary ONE, signal LSAD222000 is a binary ZERO which causes NAND gate 204-14 to switch signal ORASIH000 to a binary ONE. At the same time, NAND gate 204-8 switches signal ERASIH000 to a binary ZERO.

The above causes timing section 204 to generate only those timing signals required for accessing odd memory module 210-40. That is, AND gate 204-17 generates timing signal MRAST0010 which causes the row address to be latched into the rows of RAM chips of memory module C. Following the latching of the column address, the contents of storage location 63 defined by the row and column address is accessed and stored in odd data register 206-10 in response to timing signal MDOCT000 generated by AND gate 204-15. Thereafter, word 63 of module C is applied to lines MUXD0015 and no new data is applied to lines MUXD16-31. It will be appreciated that the state of signal MYBNDY010 may be used to signal the occurrence of the boundary condition to central processing unit 40.

Address sequencing and address decoding proceeds in the above manner until the location corresponding to 256 K is reached. From that point on, bus address bit 4 is switched to binary ONE. As seen from Figure 4b, this causes signal LSADX6200 to switch to a binary ZERO while signal LSADX6210 switches to a binary ONE. Thus, decoder circuit 207-40 is enabled. The address decoding for the next 256 K locations is carried out by decoder circuit 207-40 through the generation of signals DRAST4010 through DRAST7010.

The extension of each sub-boundary address condition and the detection of an address boundary condition every 64 words proceed as described previously. The only difference is that the rows of RAM chips of modules B and D are enabled instead of modules A and C using signals DRAST4010-DRAST7010 instead of signals DRAST0010-DRAST3010.

From the above, it is seen how the addressing apparatus of the present system is able to provide simultaneous access to a plurality of sequential word locations during a single bus cycle of operation. Accessing is accomplished by having the addressing apparatus responsive to the least significant address bits of each request which are coded to specify a first row of RAM chips to be accessed within a first one of a plurality of memory modules. The addressing apparatus includes a minimum of storage and operates without any adverse affect on memory system performance. The arrangement also permits double word access to start with even or odd word addresses in the case of read/write operations and with a minimum of circuits.

Obviously, many changes may be made. For example, the address boundary conditions may be adjusted by altering the size of the adder circuit 207-54 and modifying the boundary circuits of block 207-15. Also, the sequential addressing apparatus may be used with memory module units having any number of rows of chips. Also, the system may be used to access any number of storage locations within a corresponding· number of memory module units. Again, the system permits addressing to start with any word in any memory module unit. That is, a 4 module system would be organized as follows:

Module 0 contains words 0, 4,....,
Module 1 contains words 1, 5,....,
Module 2 contains words 2, 6,....,
Module 3 contains words 3, 7,....,

The number of least significant bits would be increased from 2 to 3. Also, the number of adder circuits would be increased from 1 to 3 with each adder circuit constructed to include its own carry input logic circuits for detecting different sub-boundary conditions. In this arrangement, module 3 is similar to the previously described odd module unit in that it does not require an adder circuit to be connected to series with its address input lines. Module 2 adder carry logic circuits operate to detect least significant address bit value 111 as sub-boundary condition similar to the adder carry logic circuits of the previously described even module unit. Each of module 1 and 0 adder carry logic circuits operate to detect a plurality of different least significant address bit values as sub-boundary conditions. In the case of module 1, these values are 111 or 110. For module 0, these values are 111, 110 or 101. The sub-boundary conditions· result from the increased number of interconnections between the gates included in decode circuits of Figure 4b. In this example, each gate would have 4 units. The NAND gate which connects the module 0 would have its inputs connected to decoder outputs 0, 5, 6, and 7 as contrasted with the present embodiment in which the NAND gate inputs connect to decoder outputs 0 to 3. The decoder outputs 5, 6, and 7 define the sub-boundary address conditions for module 0 in this example in the same manner that decoder output 3 defined the sub-boundary address condition for the even module as previously described.

**Claims**

1. Memory system comprising a plurality (r) of blocks, each containing a plurality of word locations with successive addresses being located in successive blocks in cyclic sequence, and including addressing circuitry for accessing a sequence of a plurality (n) of words lying in successive blocks, including address incrementing means for incrementing the high-order part of bits of the address of the first word of the sequence, and including decoding circuitry associated with the low-order part of bits of the address of the first word of the sequence to effect the loading of either the unincremented or the incremented high-order part of address bits into the address register and to initiate block selection starting with the block including the first word and taking the blocks in cyclic sequence, characterized in that the number of blocks (r) is a multiple (greater than 1) of the number of words (n) which can be accessed simultaneously, said decoding circuitry comprising first circuitry for block selection (207-2) and second circuitry for boundary detection (207-15) which detects when the said low-order part of address bits constitute a boundary condition (for example, 1 1 in the case of n = 2 and r = 4) whereupon the address incrementing means (207-54) are activated for incrementing the said high-order part of address bits by "+1"; and that timing means (204) are provided which enable the addressing circuitry to access the whole sequence of words in a single cycle in the case of a non-boundary condition, while in the case of a boundary condition a second cycle is initiated in which the said address incrementing means (207-54) perform the address incrementing of the said high-order part of address bits by "+1" and load the incremented address into the address register for accessing the said sequence of words from the said successive blocks.

2. Memory system according to claim 1, characterized in that the high-order part of the desired address is fed direct to the block containing the desired address and also, via the incrementing means (207-54), to the next block in sequence during the first cycle if the incrementing does not produce an overflow.

3. Memory system according to claim 1 or 2, characterized by an organization of the blocks in terms of rows RAM chips for simultaneous generation of block select signals to preselect the blocks containing the word pair (in the case of n = 2) during a first part (RAS) of the memory cycle during which the row address is loaded into said block of chips while the column address is loaded during the second half of the cycle.

4. Memory system according to claims 1, 2 or 3, characterized in that at least a pair of block select signals (RAS) are simultaneously generated in response to the address portion which does not require incrementing whereby even word block (RAS) signals are provided to even word modules while odd word block (RAS) signals are provided to odd word modules.

5. Memory system according to any one of the previous claims, characterized in that the block selection circuitry (207-2) comprises decoding logic (207-20, 207-40) having a plurality of outputs corresponding to the number of blocks, and a set of gates (207-24 to 30, 207-44 to 50), one for each block, each fed with two adjacent outputs of the decoding circuitry in cyclic sequence.

6. Memory system according to any one of the previous claims, characterized in that the timing means (204; Fig. 4a) generate a sequence of timing signals and that, under the control of said timing means, the contents of the address registers (207-40, 207-42) is multiplexed onto a common bus to memory locations for storing said plurality of blocks and is fed sequentially over said bus to said memory locations to store the addresses sequentially therein for the access of data within said block.

**Patentansprüche**

1. Speichersystem, das aufweist eine Vielzahl (r) von Blöcken, von denen jeder eine Vielzahl von Wortstellen, enthält, wobei hintereinanderfolgende Adressen in hintereinanderfolgenden Blöcken in zyklischer Folge angeordnet sind, und das eine Adressierschaltung zum Zugreifen auf eine Folge einer Vielzahl (n) von Wörtern enthält, die in hintereinanderfolgenden Blöcken liegen, und das eine adressinkrementierende Einrichtung zum Inkrementieren des höherwertigen Teils von Bits der Adresse des ersten Wortes der Folge enthält, und das eine Dekodierschaltung enthält, die mit dem niederwertigen Teil der Bits der Adresse des ersten Wortes der Folge verbunden ist, um das Laden entweder des nichtinkrementierten oder des inkrementierten höherwertigen Teils von Adressbits in das Adressregister zu bewirken und um eine Blockauswahl auszulösen, die mit dem Block anfäng, der das erste Wort enthält, und die Blöcke in zykliche Folge vornimmt, dadurch gekennzeichnet daß die Anzahl der Blöcke (r) ein Vielfaches (größer als 1) der Anzahl der Worte (n) ist, auf die gleichzeitig zugegriffen werden kann, daß die Dekodierschaltung aufweist eine erste Schaltung für die Blockauswahl (207-2) und eine zweite Schaltung für eine Grenzfeststellung (207-15), die es feststellt, wenn der niederwertige Teil der Adressbits eine Grenzbedingung (z.B. 1 1 im Falle von n = 2 und r = 4) bildet, wonach die adressinkrementierende Einrichtung (207-54) zum Inkrementieren des höherwertigen Teils der Adressbits um "+1" ausgelöst wird; und daß eine Zeitgabeeinrichtung (204) vorgesehen ist, die die Adressierschaltung berechtigt, um auf die gesamte Folge von Wörtern in einem einzigen Zyklus im Fall einer Nicht-Grenzbedingung zuzugreifen, während im Fall einer Grenzbedingung ein zweiter Zyklus ausgelöst wird, in dem die adressinkrementierende Einrichtung (207-54) die Adressinkrementierung des höherwertigen Teils der Adressbits um "+1" durchführt und die inkrementierte Adresse in das Adressregister zum Zugreifen auf die Folge von Wörtern von den hintereinanderfolgenden Blöcken lädt.

2. Speichersystem nach Anspruch 1, dadurch gekennzeichnet, daß der höherwertige Teil der gewünschten Adresse direkt dem Block zugeführt wird, der die gewünschte Adresse enthält und ebenfalls über die inkrementierende Einrichtung (207-54) zu dem nächsten Block in Folge während des ersten Zykluses zugeführt wird, wenn das Inkrementieren keinen Überlauf erzeugt.

3. Speichersystem nach Anspruch 1 oder Anspruch 2, gekennzeichnet durch eine Blockorganisation in der Art von Reihen-Ram-Chips zum gleichzeitigen Erzeugen von Blockauswahlsignalen, um die Blöcke vorauszuwählen, die das Wortpaar (im Falle von n = 2) während eines ersten Abschnittes (RAS) des Speicherzykluses enthalten, während dessen die Reihenadresse in diesen Block von Chips geladen wird, wohingegen die Spaltenadresse während der zweiten Hälfte des Zykluses geladen wird.

4. Speichersystem nach einem der Ansprüche 1 bis 3, dadurch gekennzeichnet, daß zumindest ein Paar von Blockauswahlsignalen (RAS) simultan in Antwort auf einen Adressabschnitt erzeugt wird, für den ein Inkrementieren nicht erforderlich ist, wobei gerade Wortblock-(RAS) Signale geraden Wortmodulen zugeführt werden, während ungerade Wortblock-(RAS) Signale ungeraden Wortmodulen zugeführt werden.

5. Speichersystem nach einem der vorhergehenden Ansprüche, dadurch gekennzeichnet, daß die Blockauswahlschaltung (207-2) aufweist eine Dekodierlogik (207-20, 207-40) mit einer Vielzahl von Ausgängen, die der Anzahl der Blöcke entspricht, und einen Satz von Gattern (207-24 bis 30, 207-54 bis 50), und zwar eines für jeden Block, von denen jedes mit zwei benachbarten Ausgängen der Dekodierschaltung in zyklischer Folge versorgt wird.

6. Speichersystem nach einem der vorhergehenden Ansprüche, dadurch gekennzeichnet, daß die Zeitgabeeinrichtung (204; Fig. 4a) eine Folge von Zeitgabesignalen erzeugt und daß unter der Steuerung der Zeitgabeeinrichtung die Inhalte der Adressregister (207-40, 207-42) auf einem gemeinsamen Bus zu Speicherstellen zum Speichern der Vielzahl von Blöcken gemultiplext werden und sequenziell über den Bus den Speicherstellen zugeführt werden, um die Adressen sequenziell in diesen für den Zugriff auf Daten innerhalb des Blocks zu speichern.

# EP 0 032 136 B1

**Revendications**

1. Système de mémoire comprenant une pluralité (r) de blocs, chacun comprenant une pluralité d'emplacements de mots à adresses successives, localisées dans des blocs successifs selon une séquence cyclique, et comprenant des circuits d'adressage destinés à l'accès d'une séquence composés d'une pluralité (n) de mots situés dans les blocs successifs, comportant des moyens d'incrémentation de l'adresse destinéss à incrémenter la partie d'ordre supérieure des bits de l'adresse du premier mot de la séquence et comprenant un circuit de décodage, associé à la partie d'ordre inférieure des bits de l'adresse du premier mot de la séquence, afin de charger, soit la partie non-incrémentée, soit la partie incrémentée d'ordre supérieur des bits d'adresse dans le registre d'adresse et afin d'initialiser la sélection du bloc en commençant par le bloc comprenant le premier mot et en prenant les blocs selon une séquence cyclique, caractérisé en ce que le nombre de blocs (r) est un multiple (supérieur à 1) du nombre de mots (n) auxquels on peut accèder simultanément, ledit circuit de décodage comprenant un premier circuit de sélection de block (207-2) et un second circuit de détection de limite (207-15) qui detecte le fait que ladite partie d'ordre inférieur des bits d'adresse constitue une condition limité (par exemple, 1 1 dans le cas ou n = 2 et r = 4), sur quoi les moyens d'incrémentation d'adresse (207-54) sont activés de façon à incrémenter ladite partie d'ordre supérieure des bits d'adresse de "+1"; et en ce que des moyens d'attribution de cycle (204) sont prévus et permettent au circuit d'adressage de donner accès à la totalité de la séquence de mots en un seul cycle dans le cas où l'on se trouve dans une condition non-limite, tandis que, dans le cas où l'on se trouve dans une condition limite, un second cycle est initialise, dans lequel lesdits moyens d'incrémentation d'adresse (207-54) exécutent l'incrémentation d'adresse de ladite partie d'ordre supérieure des bits d'adresse, par le valeur "+1", et chargent l'adresse incrémentée dans le registre d'adresse, afin de donner accès à ladite séquence de mots provenant desdits blocs successifs.

2. Système de mémoire selon la revendication 1, caractérisé en ce que la partie d'ordre supérieur de l'adresse désirée est amenée directement au bloc contenant l'adresse désirée et également, par l'intermédiaire des moyens d'incrémentation (207-54), au bloc suivant dans la séquence, lors du premier cycle, si l'incrémentation ne produit pas de dépassement de capacité.

3. Système de mémoire selon la revendication 1 ou 2, caractérisé par une organisation des blocs, en terme de rangées de composants RAM, destinée à produire une génération simultanée de signaux de sélection de bloc afin de présélectionner les blocs contenant la paire de mots (dans le cas où n = 2) durant une première partie (RAS) du cycle mémoire durant lequel l'adresse de rang est chargée dans ledit bloc de composant, tandis que l'adresse de colonne est chargée durant la seconde moitié du cycle.

4. Système de mémoire selon la revendication 1, 2 ou 3 caractérisé en ce qu'au moins deux signaux de sélection de bloc (RAS) sont produits simultanément, en réponse à la partie d'adresse qui ne nécessité par d'incrémentation, de manière que des signaux (RAS) de bloc de mot pair soient fournis aux modules de mots pairs, tandis que des signaux (RAS) de bloc de mot impair sont fournis à des modules de mots impairs.

5. Système de mémoire selon l'une quelconque des revendications précédentes, caractérisé en ce que le circuit de sélection de bloc (207—2) comprend une logique de décodage (207-20, 207-40) comportant plusieurs sorties correspondant au nombre de blocs, et un jeu de portes (207-24 à 30, 207-44 à 50), une pour chaque bloc, chacune étant alimentée par deux sorties adjacentes du circuit de decodage, selon une séquence cyclique.

6. Système de mémoire selon l'une quelconque des revendications précédentes, caractérisé en ce que les moyens d'attribution de cycle (204; figure 4a) produisent une succession de signaux de synchronisation et que, sous le contrôle desdits moyens d'attribution de cycle, les contenus des registres d'adresse (207-40, 207-42) sont multiplexés sur un bus commun, en des emplacements de mémoire, pour mettre en mémoire ladite pluralité de blocs, et sont amenés de manière séquentielle, sur ledit bus auxdits emplacements de mémoire, afin d'y mettre on mémoire les adresses de manière séquentielle, pour l'accès aux données situées dans ledit bloc.

13

Fig. 1.

ADDRESS (8)(BSAD00-BSAD07)

ADDRESS (16)(BSAD08-BSAD23)

ADDRESS PARITY (1) (BSAP00)

DATA (16) (BSDT00-BSDT15)

DATA PARITY (2) (BSDP00,BSDP08)

DATA (16) (BSDT16-BSDT31)

DATA PARITY (2) (BSDP16,BSDP24)

MEMORY REFERENCE (1) (BSMREF)

BUS WRITE (1) (BSWRIT)

BUS BYTE MODE (1) (BSBYTE)

BUS LOCK (1) (BSLOCK)

SECOND HALF BUS CYCLE (1)(BSSHBC)

BUS MASTER CLEAR (1) (BMCLR)

BUS REQUEST (1)(BSREQT)

DATA CYCLE NOW (1) ( BSDCNN)

BUS ACKNOWLEDGE RESPONSE (1)(BSACKR)

BUS WAIT (1) (BSWAIT )

BUS NEGATIVE ACKNOWLEDGE RESPONSE (1)(BSNAKR)

TIE BREAKING NETWORK (9) (BSAUOK-BSIUOK)

TIE BREAKING NETWORK (1) (BSMYOK)

SYSTEM
BUS
INTERFACE

} ADDRESS

} FIRST DATA WORD

} SECOND DATA WORD

} CONTROL

} BUS HANDSHAKE AND TIMING

} TIE BREAKING NETWORK

MEMORY
SUBSYSTEM
20

MEMORY SUBSYSTEM
INTERFACE LINES
10

*Fig. 2.*

2

Fig. 3.

Fig. 4a.

Fig. 4b.
(sheet 1 of 2)

Fig. 4b.
(sheet 2 of 2)

Fig. 4c.

Fig. 5.

MSB ... LSB

0 3 | 4 | 5 ... 20 | 21 | 22 | 23

CONTROLLER SELECT ADDRESS — UPPER/LOWER MEMORY SELECT — RAM CHIP ADDRESS — CHIP SELECT — BYTE SELECT

*Fig. 6a.*

EVEN WORD STACKS — ODD WORD STACKS

WORD 524,288
•
•
•
WORD 262,152
WORD 262,148

RAS6 — 64K

WORD 524,289
•
•
•
WORD 262,153
WORD 262,149

RAS7 — 64K

WORD 524,286
•
•
•
WORD 262,150
WORD 262,146

RAS4 — 64K

WORD 524,287
•
•
•
WORD 262,151
WORD 262,147

RAS5 — 64K

MODULE B — MODULE D

UPPER 256K WORDS (BSAD04010=1)

EVEN WORD STACKS — ODD WORD STACKS

WORD 262,144
•
•
WORD 62
•
WORD 6
WORD 2

RAS2 — 64K

WORD 262,145
•
•
WORD 63
•
WORD 7
WORD 3

RAS3 — 64K

WORD 262,142
•
•
WORD 60
•
WORD 4
WORD 0

RAS0 — 64K

WORD 262,143
•
•
WORD 61
•
WORD 5
WORD 1

RAS1 — 64K

MODULE A — MODULE C

LOWER 256K WORDS (BSAD04010 = 0)

*Fig. 6b.*

9